Europäisches Patentamt

European Patent Office

Office européen des brevets

(19)

(11) Veröffentlichungsnummer: **0 072 906**
**B1**

(12) # EUROPÄISCHE PATENTSCHRIFT

(45) Veröffentlichungstag der Patentschrift:
**20.03.85**

(51) Int. Cl.⁴: **F 16 H 39/02,** F 16 H 39/44,
F 15 B 20/00, E 02 F 9/22

(21) Anmeldenummer: **82105898.9**

(22) Anmeldetag: **02.07.82**

(54) **Hydraulische Steuereinrichtung zur Drucklosschaltung einer hydraulischen Arbeitsleitung.**

(30) Priorität: **20.08.81 DE 3132951**

(73) Patentinhaber: **Ing. Alfred Schmidt GmbH, D-7822 St. Blasien (DE)**

(43) Veröffentlichungstag der Anmeldung:
**02.03.83 Patentblatt 83/9**

(72) Erfinder: **Fritz, Günter, Ing.grad., Rosenstrasse 4, D-7867 Wehr (DE)**
Erfinder: **Brunner, Gustav, Ing., Blasiwaldweg 3, D-7822 Häusern (DE)**

(45) Bekanntmachung des Hinweises auf die Patenterteilung:
**20.03.85 Patentblatt 85/12**

(74) Vertreter: **Siebert . Grättinger & Bockhorni, Postfach 1649 Almeidaweg 35, D-8130 Starnberg (München) (DE)**

(84) Benannte Vertragsstaaten:
**AT BE CH DE FR GB IT LI LU NL SE**

(56) Entgegenhaltungen:
**DE - A - 1 450 814**
**DE - A - 1 550 729**
**DE - A - 1 580 286**
**DE - A - 2 524 466**
**FR - A - 2 203 472**

# Beschreibung

Die Erfindung betrifft eine hydraulische Steuereinrichtung zur Drucklosschaltung einer hydraulischen Antriebsleitung zwischen Pumpen- und Motorteil des hydraulischen Antriebsaggregats von Schneeräummaschinen; in Abhängigkeit vom Erreichen eines einstellbaren Höchstdrucks in der Antriebsleitung.

Um derartige Maschinen, insbesondere solche mit rotierenden Werkzeugen, vor mechanischer Zerstörung zu schützen, wenn sie beispielsweise durch Auftreffen auf ein Hindernis überlastet werden, kamen bisher mechanische Sicherungen zur Anwendung. Als Beispiel wird auf die bekannten mechanischen Abschersicherungen mittels Abscherbolzen bei Antrieben für die Frästrommeln an Schneefräsen verwiesen. Dort sitzt ein Hydraulikmotor mittig zwischen den beiden Frästrommelhälften, zu deren Antrieb jeweils horizontale Antriebswellen zur freien Stirnseite jeder Frästrommelhälfte geführt sind, wo eine Abscherbolzensicherung vorgesehen ist.

Zur Überlastsicherung einer hydrostatischen Kraftübertragungsvorrichtung ist die Verwendung eines vorgesteuerten Entlastungsventils bekannt (DE-A Nr. 1550729), welches durch ein federbelastetes Steuerventil in Abhängigkeit vom Arbeitsdruck gesteuert wird. Das Steuer- und das Entlastungsventil müssen dabei noch mit einer Hilfspumpe und einem Hydraulikspeicher zusammenwirken.

Ferner ist es prinzipiell bekannt (FR-A Nr. 2203472), bei einem hydrostatischen Arbeitskreis einen Bypass durch ien vorgesteuertes Zweiwege-Sitzventil 8 herzustellen, welches mittels eines elektrisch angesteuerten Zweiwegeventils 18 geöffnet werden kann, wobei die elektrischen Steuerimpulse durch auf den Arbeitsdruck ansprechende Druckschalter 28, 30 erzeugt werden.

Zur Funktionsgewährleistung müssen ferner noch ein Druckregelventil sowie ein weiteres Steuerventil vorgesehen werden.

Der Erfindung liegt die Aufgabe zugrunde, eine unkomplizierte und störsichere hydraulische Steuereinrichtung für hydraulisch angetriebene Schneeräummaschinen zu schaffen, welche eine Abschaltung der hydraulischen Antriebsverbindung als Folge eines überhöhten Arbeitsdrucks bewirkt.

Nach dem Vorschlag der vorliegenden Erfindung wird diese Aufgabe bei einer eingangs genannten Steuereinrichtung dadurch gelöst, dass die Antriebsleitung über ein vorgesteuertes Zweiwege-Sitzventil mit einem Tank für Hydraulikflüssigkeit verbunden ist, dass die Steuerleitung des Zweiwege-Sitzventils vor Erreichung des Höchstdruckes mittels eines elektrisch ansteuerbaren Mehrwege-Vorsteuerventils mit der Antriebsleitung verbunden ist, dass ein Kolbendruckschalter bei Überschreitung des Höchstdrucks in der Antriebsleitung auf Durchgang zum Tank (Unterbrechung der Antriebsverbindung) schaltet, und dass ein in Reichweite einer Bedienungsperson angeordneter Impulsschalter bei seiner Betätigung das Vorsteuerventil wieder in die Betriebsstellung (Aufrechterhaltung der Antriebsverbindung) schaltet.

Der mit der Erfindung erzielte Vorteil besteht vor allem darin, dass bei einer mechanischen Überbelastung des angetriebenen Aggregats eine gefährliche Drucküberhöhung vermieden wird.

Vorteilhaft wird die Steuereinrichtung so geschaltet, dass die Steuerleitung zum Zweiwege-Sitzventil in der Betriebsstellung des Vorsteuerventils mit der Antriebsleitung, in der Abschaltstellung des Vorsteuerventils mit dem Tank verbunden ist. Das Vorsteuerventil ist zweckmässig einer Raste verbunden, mittels welcher es in seinen beiden durch den Kolbendruckschalter oder den Impulsschalter erzeugten Schaltstellungen festgehalten wird.

Von besonderem Vorteil ist die erfindungsgemässe Steuereinrichtung in ihrer Anwendung bei hydraulischen Antrieben für Frästrommeln an Schneefräsen oder an Schneeschleudern, wobei die Kraftübertragung der Antriebswelle gegen Überlastung gesichert ist. Hier bringt die Anwendung der erfindungsgemässen Steuereinrichtung eine erhebliche Vereinfachung mit sich, da unter Beibehaltung der kürzesten und direktesten Antriebsverbindung für das hydraulische Antriebssystem nur noch ein einziger Kolbendruckschalter notwendig ist.

Die erfindungsgemässe Steuereinrichtung kommt in Funktion, sobald der Druck in der Antriebsleitung zwischen Pumpen- und Antriebsteil des hydraulischen Antriebs über einen vorgegebenen Höchstdruck ansteigt. Bei einer Schneefräse ist dies beispielsweise dann der Fall, wenn die Frästrommel gegen ein vom Fahrer der Schneefräse nicht erkanntes Hindernis fährt. In solchen Fällen wird einer mechanischen Zerstörung der Frästrommeln dadurch vorgebeugt, dass die Steuereinrichtung, betätigt über den Kolbendruckschalter, die Antriebsleitung drucklos schaltet, wobei die Pumpe in den Tank fördert. Der Fahrer hat jetzt die Möglichkeit, dem Hindernis auszuweichen oder es auf andere Weise zu überwinden und kann dann durch Betätigung des Impulsschalters im Fahrerhaus die Antriebsverbindung wieder herstellen, ohne das Fahrerhaus verlassen zu müssen. Bei den bislang üblichen Überlastsicherungen ist in eine derartige Bedienmöglichkeit nicht vorgesehen.

Die Anwendung der erfindungsgemässen Steuereinrichtung ist sinnvoll nicht nur bei Schneeräummaschinen, sondern auch bei im Sommerdienst eingesetzten Bodenoberflächen-Bearbeitungsmaschinen, welche mit entsprechenden hydraulischen Antrieben versehen sind.

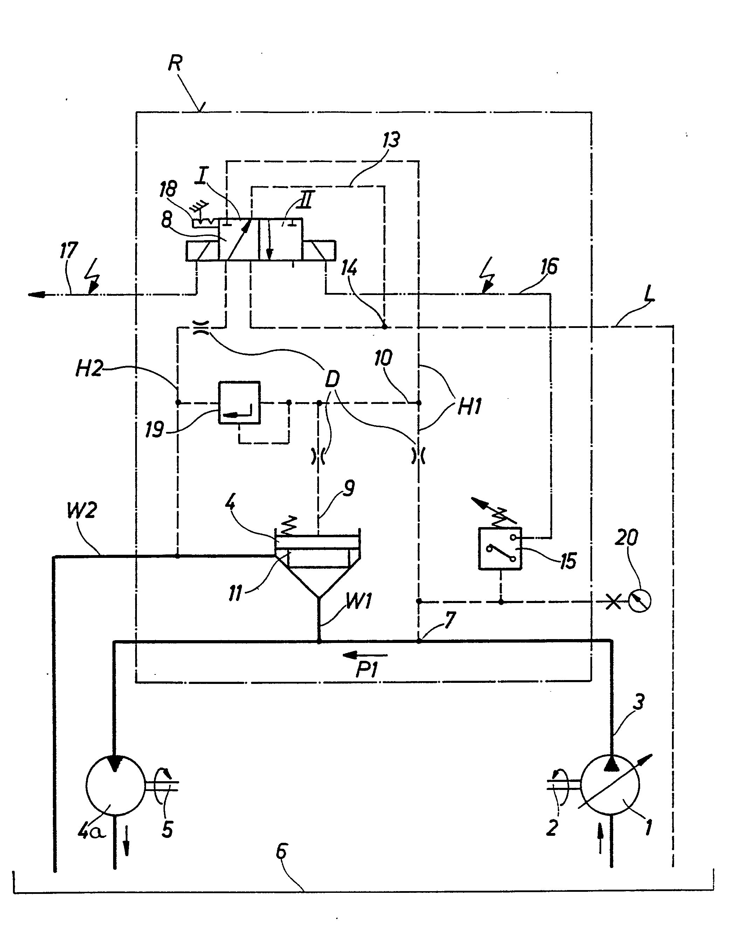

Im folgenden wird ein Ausführungsbeispiel der Erfindung anhand der Zeichnung erläutert, welche einen hyraulischen Schaltplan der erfindungsgemässen Steuereinrichtung in Verbindung mit einem hydraulischen Drehantrieb, beispielsweise für eine Schneefräse zeigt.

Eine Pumpe 1, deren Welle 2 beispielsweise von einem Dieselmotor angetrieben wird, ist über eine Antriebsleitung 3 mit einem Hydraulikmotor 4a verbunden, welcher auf eine Antriebswelle 5 treibt. An der Antriebswelle 5 sitzt beispielsweise das Getriebe für den Antrieb der beiden (nicht gezeigten) Trommelhälften einer Schneefräse. Der Hydraulikkreislauf in der Antriebsleitung 3, dessen Stromrichtung mit Pfeil P1 angebeben ist, ist über einen Tank 6 für Hydraulikflüssigkeit geschlossen. Dieser Hydraulikkreislauf ist mit einer hydraulischen Steuereinrichtung verbunden, welche innerhalb eines Rechteckrahmens R gezeichnet ist. Die Steuereinrichtung umfasst eine erste Hydraulikleitung H1, welche bei 7 mit der Antriebsleitung 3 verbunden und mit dem anderen Ende an ein Vorsteuerventil 8 angeschlossen ist.

Ferner ist an die Antriebsleitung 3 ein vorgesteuertes Zweiwege-Sitzventil 4 über einen Weg W1 angeschlossen, dessen zweiter Weg W2 zum Tank 6 führt. Die Steuerleitung 9 des Zweiwege-Sitzventils 4 ist über eine Zweigleitung 10 und die erste Hydraulikleitung H1 mit der Antriebsleitung 3 verbunden. Solange der Kolben 11 des Zweiwege-Sitzventils 4 über dessen Steuerleitung 9 unter dem Druck der Antriebsleitung 3 steht, sperrt das Zweiwege-Sitzventil den Durchgang von dessen ersten Weg W1 zu dessen zweiten Weg W2. Diese Betriebsstellung der hydraulischen Steuereinrichtung bleibt so lange aufrechterhalten, bis das Vorsteuerventil 8 den Durchgang der ersten Hydraulikleitung H1 sperrt, das ist in der gezeichneten Schaltstellung I der Fall. Eine Leckölanschlussleitung L verbindet das Vorsteuerventil 8 mit dem Tank 6, und zwar in beiden Schaltstellungen I und II.

Ferner ist zwischen Vorteuerventil 8 und dem zweiten Weg W2 des Sitzventils 4 eine zweite Hydraulikleitung H2 vorgesehen. In der Schaltstellung I des Vorsteuerventils 8 ist eine zweite Hydraulikleitung H2 auf Durchgang mit einer weiteren Leckölleitung 13 geschaltet, welche bei 14 mit der erstgenannten Leckölleitung L verbunden, also ebenfalls drucklos ist.

Ein Druckbegrenzungsventil 19, welches zwischen der ersten Hydraulikleitung H1 und der zweiten Hydraulikleitung H2 eingeschaltet ist, dient der Begrenzung des Betriebsdrucks. Auf ein derartiges Druckbegrenzungsventil kann dann verzichtet werden, wenn eine entsprechende Einrichtung bereits im Pumpenteil des hydraulischen Antriebs vorgesehen ist, was vielfach der Fall ist. Mittels eines Manometers 20 können sowohl der Kolbendruckschalter 15 als auch das Druckbegrenzungsventil 19 auf einen vorgegebenen Höchstdruck eingestellt werden.

Die hydraulische Steuereinrichtung wird ihrer Sicherheitsfunktion dadurch gerecht, dass sie die Antriebsleitung 3 drucklos schaltet sobald darin ein in einem Kolbendruckschalter 15 eingestellter Höchstdruck überschritten wird. In diesem Fall bewirkt der Kolbendruckschalter über eine elektrische Leitungsverbindung 16 ein Umschalten des Vorsteuerventils 8 in die Schaltstellung II, wobei die erste Hydraulikleitung H1 auf Durchgang mit der zweiten Hydraulikleitung H2 geschaltet wird. Diese Schaltung bewirkt eine entsprechende Entlastung der Steuerleitung 9 des Zweiwege-Sitzventils 4, dessen Kolben 11 den Durchgang des ersten Wegs W1 zum zweiten Weg W2 freigibt. Die Pumpe 1 fördert somit unter Umgehung des Hydraulikmotors 4 in den Tank 6. Eine (nicht gezeigte) Kontrolllampe zeigt jetzt im Fahrerhaus den Schaltzustand Betriebsunterbrechung.

Der Fahrer hat nun die Möglichkeit, das für die Überlastung ursächliche Hindernis zu überwinden und schaltet dann durch Betätigen eines im Fahrerhaus vorgesehenen (nicht gezeigten) Impulsschalters über eine elektrische Verbindungsleitung 17 das Vorsteuerventil 8 wieder in die gezeichnete Schaltstellung I. Mittels einer Raste 18 werden die beiden Schaltstellungen I und II des Vorsteuerventils 8 jeweils fixiert. Verschiedene mit D bezeichnete Drosseln sorgen für eine Dämpfung der Schaltvorgänge.

## Patentansprüche

1. Hydraulische Steuereinrichtung zur Drucklosschaltung einer hydraulischen Antriebsleitung (3) zwischen Pumpen- und Motorteil des hydraulischen Antribsaggregats von Schneeräummaschinen in Abhängigkeit vom Erreichen eines einstellbaren Höchstdrucks in der Antriebsleitung, dadurch gekennzeichnet, dass die Antriebsleitung (3) über ein vorgesteuertes Zweiwege-Sitzventil (4) mit einem Tank (6) für Hydraulikflüssigkeit verbunden ist, dass die Steuerleitung (9) des Zweiwege-Sitzventils (4) vor Erreichung des Höchstdruckes mittels eines elektrisch ansteuerbaren Mehrwege-Vorsteuerventils (8) mit der Antriebsleitung (3) verbunden ist, dass ein Kolbendruckschalter (15) bei Überschreitung des Höchstdrucks in der Antriebsleitung (3) das Vorsteuerventil (8), damit die Steuerleitung (9) zum Zweiwege-Sitzventil (4) und damit die Antriebsleitung (3) auf Durchgang zum Tank (6) (Unterbrechung der Antriebsverbindung) schaltet, und dass ein in Reichweite einer Bedienungsperson angeordneter Impulsschalter bei seiner Betätigung das Vorsteuerventil (8) wieder in die Betriebsstellung (Aufrechterhaltung der Antriebsverbindung) schaltet.

2. Steuereinrichtung nach Anspruch 1, dadurch gekennzeichnet, dass die Steuerleitung (9) zum Zweiwege-Sitzventil (4) in der Betriebsstellung (I) des Vorsteuerventils (8) mit der Antriebsleitung (3), in der Abschaltstellung (II) des Vorsteuerventils (8) mit dem Tank (6) verbunden ist.

3. Steuereinrichtung nach einem der Ansprüche 1 oder 2, dadurch gekennzeichnet, dass das Vorsteuerventil (8) mittels einer Raste (18) in seinen beiden, durch den Impulsschalter oder den Kolbendruckschalter (15) erzeugten Schaltstellungen (I oder II) festgehalten wird.

4. Hydraulischer Antrieb für die Frästrommeln an Schneefräsen oder die Schleuderräder an Schneeschleudern, wobei die Kraftübertragung von der Antriebswelle gegen Überlastung gesichert ist, dadurch gekennzeichnet, dass die Überlastsicherung durch eine Steuereinrichtung gemäss den Ansprüchen 1 bis 3 gebildet ist.

## Revendications

1. Dispositif hydraulique de commande pour la manœuvre sans pression d'un tuyau hydraulique d'entraînement (3) entre partie pompe et partie moteur du groupe hydraulique d'entraînement de chasse-neige sous la dépendance du fait qu'une pression maximale réglable soit atteinte dans le tuyau d'entraînement, caractérisé par le fait que le tuyau d'entraînement (3) est relié, par l'intermédiaire d'une valve à siège à deux voies (4), à un réservoir (6) à liquide hydraulique, que le tuyau de commande (9) de la valve à deux voies (4) est relié au tuyau d'entraînement (3) au moyen d'un distributeur pilote à plusieurs voies (8) pouvant être commandé électriquement, avant que la pression maximale ne soit atteinte, en ce que, lorsque la pression maximale est dépassée dans le tuyau d'entraînement (3), un pressostat à piston (15) met le distributeur pilote (8), donc le tuyau de commande (9) menant à la valve à siège à deux voies (4) et donc le tuyau d'entraînement (3) en position passage vers le réservoir (6) (interruption de la liaison d'entraînement), et en ce qu'un interrupteur à impulsions disposé à la portée d'un opérateur, lorsqu'il est actionné, met à nouveau le distributeur pilote (8) en position de service (maintien de la liaison d'entraînement).

2. Dispositif de commande selon la revendication 1, caractérisé par le fait que le tuyau de commande (9) menant à la valve à siège à deux voies (4) est relié, quand le distributeur pilote (8) est dans la position de service (I), au tuyau d'entraînement et, quand le distributeur pilote (8) est dans la position de débranchement (II), au réservoir (6).

3. Dispositif de commande selon l'une des revendications 1 ou 2, caractérisé par le fait que le distributeur pilote (8) est maintenu au moyen d'un arrêt (18) dans ses deux positions de manœuvre (I ou II) engendrées par l'interrupteur à impulsions ou le pressostat à piston (15).

4. Entraînement hydraulique pour les tambours de fraise de chasse-neige à fraise ou les roues centrifuges de chasse-neige rotatifs, la transmission de la force depuis l'arbre d'entraînement étant protégée contre la surcharge, caractérisé par le fait que la protection contre la surcharge est formée par un dispositif de commande selon les revendications 1 à 3.

## Claims

1. A hydraulic control device for the zero-pressure setting of a hydraulic drive line (3) between the pump and engine parts of the hydraulic drive unit of snow-clearing machinery in dependence on the attainment of a settable maximum pressure in the drive line, characterised in that the drive line (3) is connected *via* a pilot-operated two-way seating valve (4) to a hydraulic-liquid tank (6), and in that the control line (9) of the two-way seating valve (4) is connected to the drive line (3) by means of an electrically triggerable multi-way pilot valve (8) before the maximum pressure is reached, and in that, when the maximum pressure in the drive line (3) is exceeded, a plunger-type pressure switch (15) switches the pilot valve (8), and consequently the control line (9) to the two-way seating valve (4) and consequently the drive line (3), to through-passage to the tank (6) (interruption of the drive connection), and in that a pulse switch, which is provided within the reach of an operator, when operated switches the pilot valve (8) back to the operating position (maintenance of the drive connection).

2. A control device as claimed in Claim 1, characterised in that the control line (9) to the two-way seating valve (4) is connected to the drive line (3) in the operating position (I) of the pilot valve (8) and is connected to the tank (6) in the switch-off position (II) of the pilot valve (8).

3. A control device as claimed in Claim 1 or 2, characterised in that the pilot valve (8) is retained by means of a detent (18) in its two switching positions (I or II) produced by the pulse switch or the plunger-type pressure switch (15).

4. A hydraulic drive for the propeller drums on snow propellers or the rotary wheels on rotary snow ploughs, the power transmission from the drive shaft being protected against overloading, characterised in that the overload protection is formed by a control device as claimed in Claims 1 to 3.